# FASCICULE DE BREVET EUROPEEN

(11) **EP 0 837 262 B1**
(45) Date de publication et mention de la délivrance du brevet: **16.04.2003**
(21) Numéro de dépôt: 97420194.9
(22) Date de dépôt: 20.10.1997
(51) Int. Cl.: F16F 15/36, F24F 7/00, G01M 1/36

(54) **Dispositif d'équilibrage dynamique et pondéral pour machines à rotors, en particulier pour ventilateurs industriels**
Dynamische Vorrichtung zur gewichtsdosierenden Balanzierung, insbesondere für industrielle Ventilatoren
Weight-responsive dynamic balancing device for rotating machines,in particular for industrial ventilators

(30) Priorité: 21.10.1996 FR 9612998
(43) Date de publication de la demande: 22.04.1998
(73) Titulaire: ABB Solyvent Ventec, 69882 Meyzieu (FR)
(72) Inventeur: Hugbart, Jean-Paul, 71150 Rully (FR); Godichon, Alain François Emile, 71100 Saint Remy (FR); Trionfetti, Gianni, 20041 Agrate Brianza (IT)
(74) Mandataire: Martin, Didier

(56) Documents cités:
- EP-A- 0 460 282
- EP-A- 0 657 727
- WO-A-96/03541
- FR-A- 1 215 606
- US-A- 3 149 502
- US-A- 3 918 326
- US-A- 3 952 612
- US-A- 4 697 607
- US-A- 4 926 341

## Description

La présente invention se rapporte au domaine technique général des dispositifs d'équilibrage dynamique et pondéral pour machines à rotors, en particulier pour turbo-machines telles que des ventilateurs industriels.

La présente invention concerne un dispositif d'équilibrage dynamique et pondéral pour machines à rotor, en particulier pour ventilateurs industriels conformement an préambule de la revendication 1.

La présente invention concerne également, un ventilateur industriel équipé d'un dispositif d'équilibrage dynamique et pondéral, et plus généralement les turbomachines telles les turbines à vapeur, les compresseurs, quelque soit le fluide impliqué dans le fonctionnement de la turbomachine, étant entendu que le dispositif d'équilibrage trouve plus particulièrement, mais non exclusivement, son application à des turbomachines dont la capacité d'équilibrage requise est importante et de l'ordre sensiblement au moins de 100 000 g.mm, et de préférence comprise entre 100 000 g.mm et 5 000 000 g.mm.

L'un des problèmes majeurs des turbomachines de forte capacité telles que décrites précédemment, concerne les vibrations susceptibles d'être générées par ces machines, en particulier au niveau des paliers. Dans la plupart des cas, l'origine de ces vibrations provient du déséquilibre du rotor. Dans le cas des ventilateurs industriels dont les capacités de ventilation sont élevées, par exemple de l'ordre de 100 à 10 000 kW, les conditions normales de leur utilisation impliquent nécessairement l'apparition progressive ou soudaine d'un état de déséquilibre du rotor.

En effet, de tels appareils sont destinés à assurer la ventilation dans des secteurs industriels aussi variés que l'industrie nucléaire, l'industrie chimique, l'industrie sidérurgique, l'industrie de la cimenterie, ou encore dans des centrales thermiques.

Ils sont en conséquence couramment exposés aux risques de dépôts de particules ou de matières ventilées sur ou par les pales du ventilateur, à l'usure progressive des pales du ventilateur due aux différents effets de corrosion provenant des fluides ou gaz véhiculés par le ventilateur, ou encore à des déformations provenant de brusques variations de température.

Le dépôt de matières (colmatage) sur les pales du ventilateur s'effectue par ailleurs généralement de manière progressive et non uniforme sur les pales du ventilateur ce qui provoque un premier effet de déséquilibre du rotor. Dans certaines applications, et par exemple en cimenterie, ce premier effet de déséquilibre du rotor peut s'accompagner d'un second phénomène de déséquilibre, beaucoup plus brutal, causé par le soudain détachement d'un ou de plusieurs blocs de matière au préalable solidarisés avec les pales. Ce second phénomène provoque un fort et violent déséquilibre du rotor, particulièrement dangereux pour les appareils de forte capacité dont le diamètre des pales atteint couramment trois mètres et une vitesse de rotation d'au moins 1000 tours/minute.

Pour toutes les situations mentionnées précédemment à titre non limitatif, l'apparition de vibrations largement au-dessus des limites de fonctionnement des appareils nécessite rapidement l'arrêt du ventilateur et par voie de conséquence, l'arrêt de tout ou partie de l'unité industrielle de production afin de procéder au nettoyage des pales ou à l'équilibrage du rotor. Par ailleurs, les opérations de nettoyage ou de rééquilibrage du rotor, s'avèrent longues et particulièrement délicates. Les délais d'immobilisation du ventilateur atteignent une durée qui sur le plan industriel et économique, génère un coût important difficilement supportable.

La nécessité de résoudre pratiquement, efficacement et rapidement les problèmes mentionnés précédemment pour les turbomachines tels que les ventilateurs industriels, s'avère donc impérieuse.

Ainsi, il a déjà été proposé de réaliser un dispositif d'équilibrage dynamique et pondéral pour ventilateur industriel capable de contrôler en continu et automatiquement l'état de déséquilibreléquilibre du ventilateur en opération, et de procéder également en continu aux opérations de correction d'équilibre nécessaires. Un tel dispositif fait appel à au moins une unité d'équilibrage, en l'occurrence un anneau, porté par l'axe supportant le rotor, c'est-à-dire la roue de ventilation. L'anneau d'équilibrage comporte, en tant que moyen d'équilibrage, un fluide à haute densité capable de se vaporiser rapidement au contact de dispositifs de chauffe installés dans le circuit d'écoulement du fluide. Un système de contrôle et de correction de l'état de déséquilibre du rotor incluant un microprocesseur, mesure le niveau de vibrations du ventilateur et détermine l'emplacement du déséquilibre.

Le système de contrôle et de correction assure alors l'alimentation électrique du dispositif de chauffe situé au voisinage du lieu où le déséquilibre a été constaté, de manière à assurer la vaporisation du fluide situé dans cette même zone. Dans ce cas, le fluide vaporisé est transféré dans une chambre de refroidissement située dans une zone opposée où il se condense à nouveau et revient ainsi à son état initial liquide. Ce phénomène de transfert de fluide assure l'équilibrage du rotor.

Un tel dispositif apporte une contribution certaine au contrôle du déséquilibre d'un rotor, mais s'avère néanmoins souffrir d'un certain nombre d'inconvénients liés en particulier à l'impossibilité de s'affranchir des conditions de milieu particulièrement dures et extrêmes dans lesquelles doivent impérativement fonctionner les ventilateurs industriels. Ainsi, les conditions de variation de températures extrêmes que subissent les ventilateurs industriels peuvent conditionner de manière négative la précision du contrôle de l'équilibrage ou du rééquilibrage des rotors de ventilateurs industriels ayant recours à un équilibrage par condensation/vaporisation de fluides. Par ailleurs, la correction de l'équilibre du ventilateur étant liée au transfert ponctuel du fluide d'un point chaud à un point froid de condensation, la précision des contrôles d'un tel dispositif est limitée en raison du nombre également limité, sur la périphérie de l'anneau, des chambres de refroidissement. En d'autres termes, le rééquilibrage du rotor se fait par l'intermédiaire de zones d'équilibrage à la périphérie de l'anneau d'équilibrage, et non pas ponctuellement de manière continue sur toute la périphérie de l'anneau, ce qui conduit à une imprécision relative de l'équilibrage.

Enfin, il y a lieu de noter la relative fragilité d'un système d'équilibrage faisant appel à un circuit de fluide dont l'étanchéité doit être parfaite, alors même que les conditions de fonctionnement usuelles des ventilateurs industriels impliquent des conditions ambiantes et de milieu particulièrement difficiles et corrosives. Il apparaît en dernier lieu que les capacités d'équilibrage des systèmes à fluide sont limités à des ventilateurs industriels de capacité réduite.

On connaît également le document EP-0 657 727 qui décrit un dispositif d'équilibrage dynamique et pondéral pour machines à rotor correspondant au préambule de la revendication 1.

Dans un domaine technique différent de celui des ventilateurs industriels et pour des machines nécessitant une faible capacité d'équilibrage, à savoir les machines rectifieuses, il est déjà connu d'avoir recours à des anneaux d'équilibrage et à un système de détection du déséquilibre incluant un microprocesseur commandant le déplacement des anneaux. Dans cette réalisation, l'unité d'équilibrage est montée à l'intérieur et dans le corps même de la roue rectifieuse. De telles solutions ne sont pas adaptées à l'équilibrage de masses importantes et à des conditions de fonctionnement dans un environnement difficile.

L'objet de l'invention vise en conséquence à porter remède aux inconvénients énumérés précédemment, et à proposer un nouveau dispositif d'équilibrage dynamique et pondéral pour machines à rotor dont le contrôle de la force de correction puisse être réalisé avec précision.

Un autre objet de l'invention vise à proposer un nouveau dispositif d'équilibrage particulièrement simple à mettre en oeuvre en tant qu'équipement complémentaire, et ce, pour un coût réduit.

Un autre objet de l'invention vise à proposer un nouveau dispositif d'équilibrage capable de s'affranchir au mieux des conditions du milieu environnant, et capable d'effectuer avec une bonne précision, l'équilibrage de rotors dans des conditions extrêmes.

Un objet complémentaire de l'invention vise à proposer un nouveau dispositif d'équilibrage capable d'assurer rapidement et avec fiabilité l'équilibrage de rotors de masse importante.

Les objets assignés à l'invention sont atteints à l'aide d'un dispositif d'équilibrage dynamique et pondéral pour machines à rotor conforme à l'objet de la revendication 1.

D'autres détails et avantages de l'invention seront décrits de manière détaillée à la lumière de la description et des exemples illustratifs qui suivent ci-après, donnés uniquement à titre d'exemples non limitatifs, dans lesquels :
- La figure 1 représente une vue générale en perspective d'une ventilateur industriel équipé d'un dispositif d'équilibrage conforme à l'invention.
- La figure 2 montre, selon une vue en plan, les principaux éléments constituant le dispositif d'équilibrage conforme à l'invention et équipant un ventilateur industriel.
- La figure 3 montre, selon une vue en coupe, un anneau d'équilibrage selon une variante préférentielle de l'invention.
- La figure 4 montre un détail de réalisation d'une seconde variante de réalisation d'un anneau d'équilibrage conforme à l'invention.
- La figure 5 illustre, selon une vue partielle en plan d'un anneau d'équilibrage, les détails de réalisation d'un chariot d'équilibrage conforme à l'invention.
- La figure 6 montre, selon une coupe transversale longitudinale d'un anneau d'équilibrage, des détails de réalisation de chariots d'équilibrage et de leur déplacement dans l'anneau d'équilibrage.
- La figure 7 illustre de manière schématique l'ensemble des éléments composant le dispositif d'équilibrage conforme à l'invention.

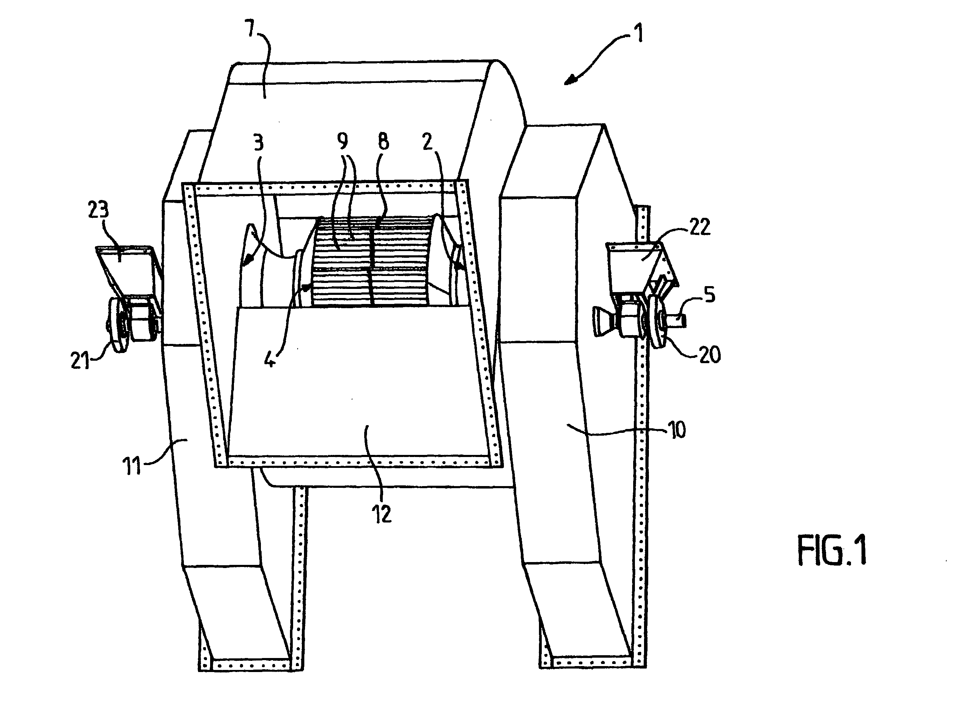

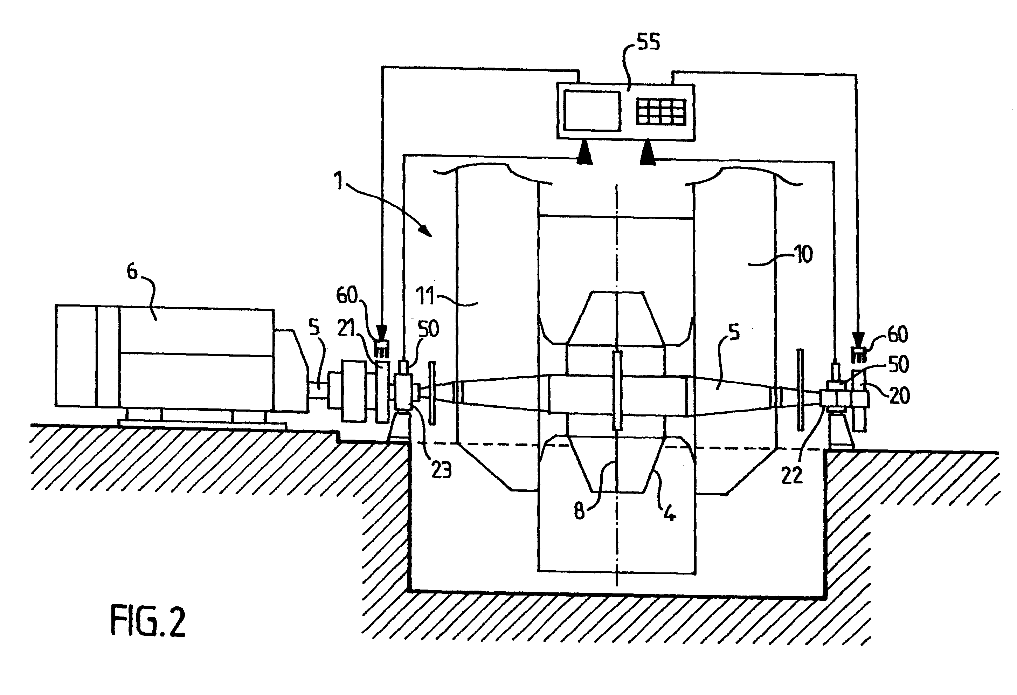

La figure 1 montre une vue générale en perspective d'un ventilateur industriel, de type centrifuge et à double flux, comportant au moins deux entrées 2,3 de fluide disposées de part et d'autre d'une roue de ventilation 4, montée et supportée en rotation par un arbre tournant 5 lui-même susceptible d'être entraîné en rotation par l'intermédiaire d'un dispositif d'entraînement (figure 2), tel qu'un moteur électrique 6 par exemple. La roue de ventilation 4, qui forme le rotor, est montée dans un bâti pourvu d'un capotage externe 7 et comporte de manière classique un disque central 8 qui peut être échancré et dont les faces latérales sont pourvues d'une série d'aubes 9 couvertes par des flasques de profil variable, approprié au type de ventilateur centrifuge et aux caractéristiques du fluide à ventiler.

Les entrées 2, 3 sont généralement au nombre de deux, et forment les unités d'aspiration du ventilateur centrifuge 1.

De manière préférentielle, les ventilateurs centrifuges 1 sont équipés au niveau des unités d'aspiration, de systèmes de régulation de flux disposés en amont de la roue de ventilation et agencés dans des chambres d'aspiration 10,11 associées à chaque entrée respectivement 2,3. Les chambres d'aspiration 10, 11 comportent de manière classique, une série de pales ou d'éléments déflecteurs de la direction et du cheminement du fluide de manière à améliorer significativement le rendement du ventilateur. De tels dispositifs sont bien connus dans l'art antérieur et ne seront en conséquence pas décrits plus en détail.

Le ventilateur industriel 1 comprend enfin, de manière classique, une sortie de refoulement 12.

Dans l'exemple qui suit, le dispositif d'équilibrage dynamique et pondéral conforme à l'invention sera décrit dans une application préférentielle en tant qu'équipement d'un ventilateur industriel 1, étant entendu qu'une telle description n'est nullement limitative et peut s'appliquer à tout type de machine à rotor portée par un axe tournant.

Dans l'exemple préférentiel de réalisation montré aux figures 1 et 2, le ventilateur 1 est équipé de deux unités d'équilibrage pondéral 20,21, disposées hors du rotor et portées par l'arbre tournant 5 tout en étant en rotation avec ce dernier. Avantageusement, les unités d'équilibrage 20,21 sont situées respectivement de part et d'autre du rotor à des distances axiales, de préférence égales de ce dernier, et au-delà des paliers d'entraînement 22,23 du rotor en considérant la position du rotor. Dans un tel cas, les unités d'équilibrage 20,21 sont situées au voisinage des paliers 22,23, une telle disposition permettant de réduire les sollicitations mécaniques de l'arbre tournant 5 et donc de réduire son diamètre.

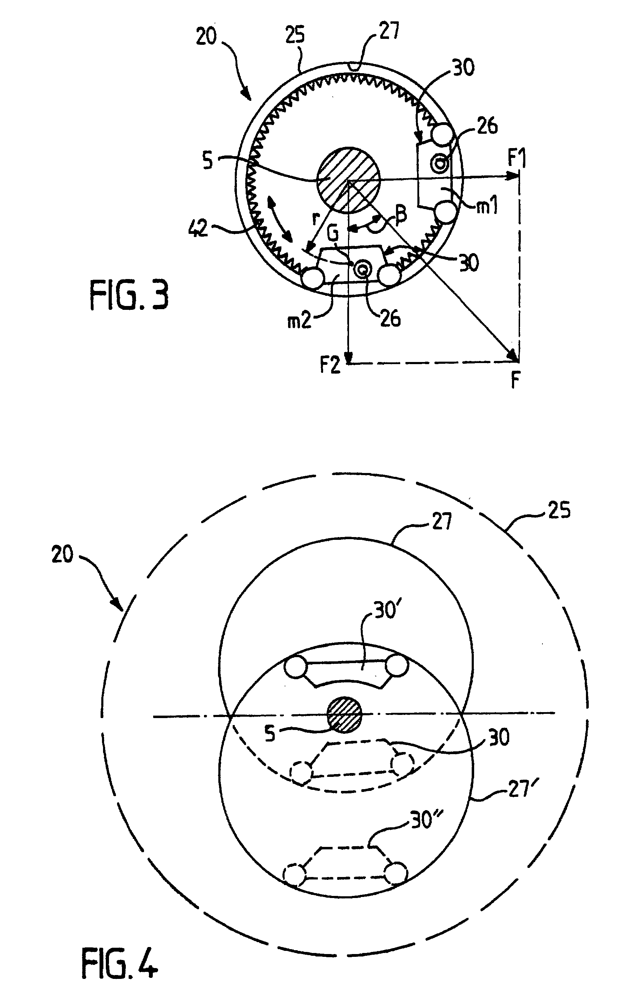

De manière avantageuse, la ou les unités d'équilibrage 20,21 se présente(nt) sous la forme d'un anneau 25 pourvu, tel que montré aux figures 3 et 4, d'un corps de protection externe dans lequel sont montées déplaçables, indépendamment l'une de l'autre, au moins deux masses d'équilibrage m1, m2, à l'état solide et de forme fixe et définie, sous l'action de moyens d'entraînement 26. Dans la variante de réalisation montrée à la figure 3, les masses d'équilibrage m1, m2 se déplacent, sous l'action d'un moyen d'entraînement 26 tel qu'un micro-moteur, associé à chaque masse, par guidage dans au moins un moyen de guidage 27 formé par une piste de roulement recouvrant, directement ou non, la périphérie interne de l'anneau 25. Les masses d'équilibrage m1, m2 sont avantageusement constituées par des chariots 30 comportant une série de roues 31 aptes à se guider dans ou sur le moyen de guidage 27. A titre de variante complémentaire, chaque chariot 30 peut être pourvu de patins de glissement.

Les masses d'équilibrage m1, m2 se déplacent en conséquence selon des trajectoires qui forment un circuit fermé autour de l'arbre tournant 5, la trajectoire étant sensiblement circulaire dans le cas présent, la position angulaire relative de chaque chariot 30 étant ajustable dans les deux directions circulaires au moyen de chaque micro-moteur 26.

A titre indicatif, la masse moyenne de chaque chariot 30 est de l'ordre de 2 à 5 kg, et peut bien évidemment varier en fonction des capacités d'équilibrage requises par la masse du rotor à équilibrer. Avantageusement, les masses de chaque chariot 30 sont identiques. On comprend que suivant la position angulaire relative de chaque chariot 30, la résultante des forces F1, F2 exercées par la masse de chaque chariot 30 produit une force résultante F (F = 2m w²r cos_β) de correction de l'équilibrage du rotor s'appliquant sur l'arbre tournant 5. Dans cette expression mathématique,:
m = la masse de chaque chariot
r = la distance du centre de gravité G de chaque chariot 26 à l'axe de l'arbre tournant
w² = le carré de la vitesse angulaire de rotation de l'arbre.
β = la position angulaire de chaque chariot relativement à la force résultante F.

Selon ce principe d'équilibrage, la force résultante d'équilibrage F est nulle lorsque les deux chariots sont opposés diamétralement, et maximale lorsqu'ils sont côte à côte relativement à la verticale.

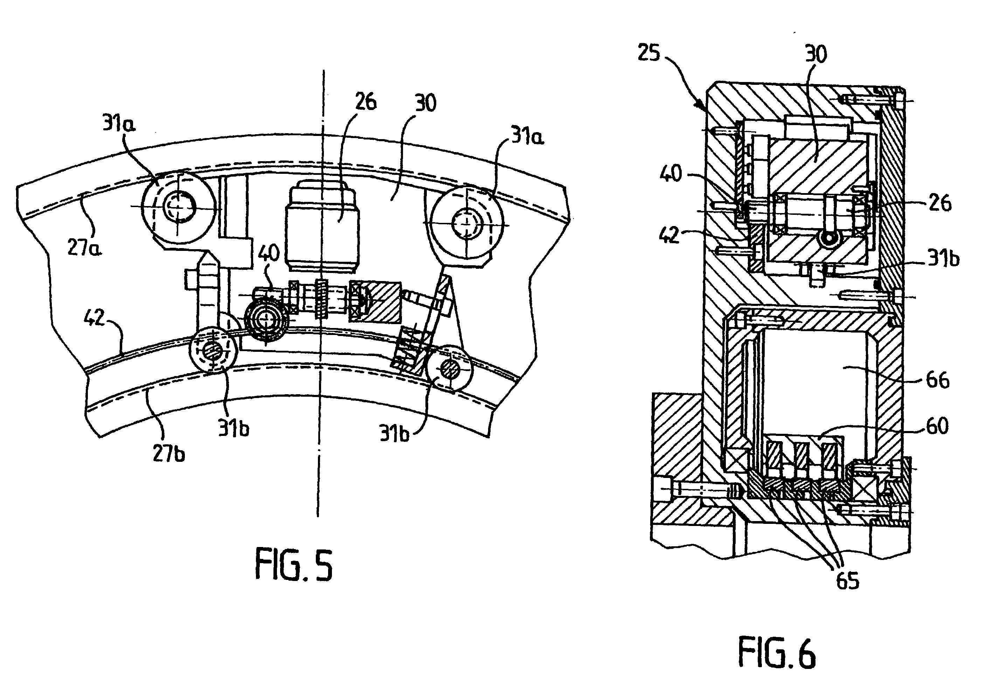

Les figures 5 et 6 montrent des détails de réalisation de la structure des chariots 30 et de l'anneau d'équilibrage 25. De manière préférentielle, les chariots 30 comportent des roues internes 31b, par exemple une paire, et des roues externes 31a, par exemple également une paire, en considérant comme point de référence le centre fictif de l'anneau 25, chaque paire de roues 31a, 31b étant associée respectivement à une piste de roulement interne 27b et externe 27a.

Selon cette variante de réalisation préférentielle, l'anneau 25 possède donc deux pistes de roulement réalisées avantageusement en un matériau ou revêtement capable de résister aux très fortes accélérations sans se déformer.

Le micro-moteur 26 logé dans chaque chariot 30 est relié fonctionnellement à un système de contrôle et de correction 55 de l'état de déséquilibre du rotor et est pourvu d'un organe de transmission de force 40, tel qu'une vis sans fin engrenant directement ou indirectement sur une crémaillère 42 concentrique aux pistes de roulement 27a, 27 b, pour assurer le déplacement angulaire des masses d'équilibrage m1, m2.

Différentes variantes de réalisation sont envisageables sans pour autant sortir du cadre de l'invention. Ainsi, il est possible de réaliser des unités d'équilibrage 20, 21 dans lesquelles les pistes de roulement 27 ne sont pas circulaires mais forment par exemple des trajectoires sensiblement elliptiques. De manière générale, chaque anneau d'équilibrage 25 comprend au moins deux chariots 30, qui sont, de préférence, de masse identique dans chaque anneau d'équilibrage 25 et entre chaque anneau 25. Il est néanmoins possible d'augmenter le nombre de chariots 30 par anneau d'équilibrage et de faire varier leur masse à la fois entre chaque anneau d'équilibrage 25, ainsi que dans chaque anneau d'équilibrage.

Il n'est également pas indispensable comme dans la variante de réalisation montrée à la figure 3, que la paire de chariots 30 se déplace sur ou dans la même piste de roulement 27. Ainsi, la variante de réalisation illustrée à la figure 4 montre un mode de réalisation dans lequel chaque chariot 30 composant la paire de masses d'équilibrage se déplace dans des pistes de roulements différentes, de préférence situées dans des plans axiaux différents mais parallèles. Dans la variante montrée à la figure 4, chaque chariot 30 évolue à une distance variable de l'arbre tournant 5 sur des trajectoires circulaires, mais non centrées relativement à l'axe de l'arbre de rotation 5. Ainsi, sur la figure 4, le chariot 30' déplaçable sur la piste de roulement 27' a été représenté occupant une seconde position 30", alors que sur la piste 27, le chariot 30 a été représenté occupant une position rapprochée et symétriquement opposée à celle du chariot 30' par rapport à l'arbre de rotation 5.

Cette variante de réalisation a l'avantage de permettre un positionnement angulaire des chariots 30' et 30 dans lequel leur distance relative moyenne est plus faible que dans la variante à piste de roulement unique. La position rapprochée des chariots 30' et 30 est alors particulièrement utile lors de la mise en service des rotors dans un état parfaitement équilibré puisqu'une telle position rapprochée permet d'effectuer de faibles corrections d'équilibrage avec corrélativement de faibles efforts appliqués à la structure mécanique en comparaison avec les variantes de réalisation à piste unique. Ceci permet une réduction des efforts appliqués sur l'ensemble des pièces des unités d'équilibrage 20, 21 contribuant à la longévité des différents composants, et notamment à celle des pistes de roulement 27.

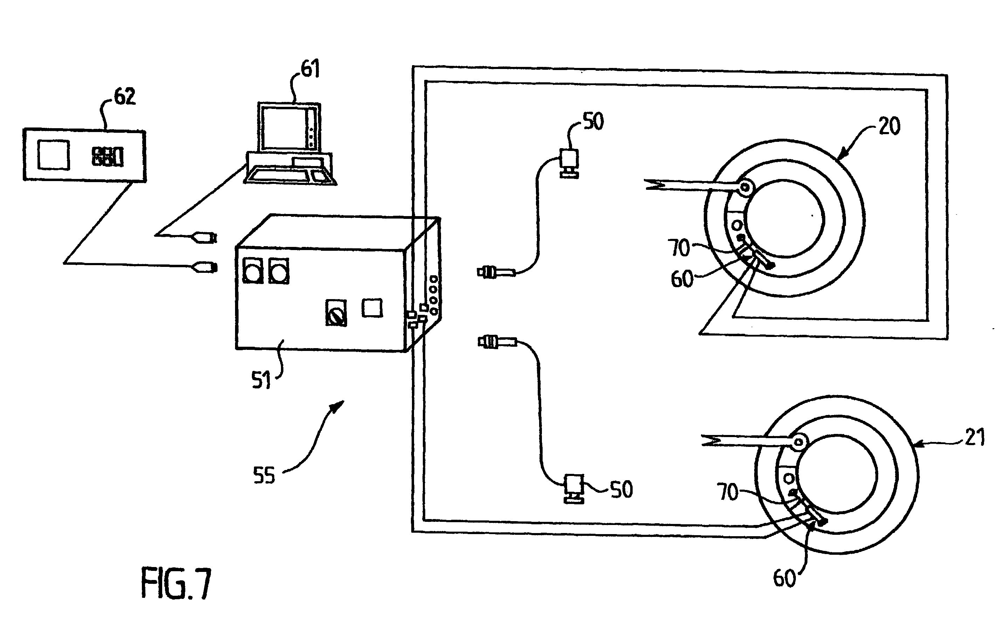

Les unités d'équilibrage 20, 21 sont sous le contrôle d'un système de contrôle et de correction 55 de l'état de déséquilibre qui est schématiquement présenté à la figure 7, et qui a pour fonction principale d'évaluer l'état de déséquilibre/équilibre du rotor c'est à dire de la roue de ventilation 4, et de procéder, de préférence automatiquement, aux corrections nécessaires en commandant et pilotant les masses d'équilibrage m1, m2.

Un tel système comprend de manière préférentielle:
- au moins un capteur d'une valeur représentative de l'état de déséquilibre du rotor,
- un microprocesseur chargé, d'une part d'évaluer en permanence l'état de déséquilibre du rotor par comparaison des valeurs mesurées transmises en permanence par le ou les capteurs avec des valeurs de référence préalablement enregistrées, et d'autre part, si le résultat de la comparaison fait apparaître un état de déséquilibre, de commander et piloter le déplacement d'au moins une masse d'équilibrage m1, m2 jusqu'à l'équilibrage complet du rotor,
- une interface électro-mécanique entre : le ou les capteurs, le microprocesseur et les moyens d'entraînement des masses d'équilibrage m1, m2.

Avantageusement, le système de contrôle et de correction de l'état de déséquilibre 55 comporte en tant que capteur au moins un capteur de vibrations 50 (figures 2 et 7), et de préférence deux capteurs disposés chacun au voisinage d'une unité d'équilibrage 20, 21, sur un palier d'entraînement 22 ou sur l'arbre tournant 5. Le ou les capteurs de vibrations 50 sont reliés fonctionnellement à un microprocesseur 51 possédant un algorithme de calcul et un ensemble de registres à mémoires dans lesquels sont stockés les données de références et successivement les mesures de vibration constituant un système de valeurs de références pour le déroulement de l'algorithme de calcul.

L'interface électro-mécanique tel que cela est montré aux figures 6 et 7 comporte un contacteur 60 monté dans chaque unité d'équilibrage 20, 21, relié au microprocesseur d'une part et susceptible d'entrer en relation de friction ou frottement avec des pistes de contact 65 reliées électriquement aux chariots 30 d'autre part. Le contacteur 60 peut par exemple être un anneau de frottement fixé à demeure dans l'anneau d'équilibrage 25, et par exemple dans une chambre inférieure 66, pour être en contact permanent avec les pistes de contact 65 lors de leur déplacement, ou être montés mobile par exemple à l'aide d'un levier commandé par un vérin 70 (Fig.7) pour venir en contact avec les pistes 65 uniquement si un état de déséquilibre du rotor est détecté.

Le système de contrôle et de correction de l'état de déséquilibre 55 peut être connecté à un ordinateur 61, de type PC par exemple, pour enregistrer et surveiller les données fournies en permanence par les instruments de mesure de l'équilibrage ainsi que les corrections effectuées. Le système peut également être connecté à un panneau de contrôle et de commande à distance 62, permettant par exemple d'entrer ou de modifier des paramètres de contrôle ou de fonctionnement du dispositif.

Le fonctionnement du dispositif d'équilibrage conforme à l'invention selon un exemple préférentiel d'algorithme de calcul est le suivant.

Le ventilateur industriel étant en marche, le ou les capteurs 50 fournissent en permanence au microprocesseur, et à intervalles réguliers, une série de mesures de vibrations de la machine. Le microprocesseur compare en permanence les informations reçues par les capteurs 50 à ses propres données de références parmi lesquelles figure une valeur de vibrations limites à ne pas dépasser. Lorsque cette valeur maximale est dépassée, signifiant qu'un état de déséquilibre est détecté, le microprocesseur sélectionne l'un ou l'autre des anneaux d'équilibrage 20, 21 selon le capteur ayant détecté le déséquilibre. Le microprocesseur 51 commande et pilote ensuite le déplacement d'un chariot 30 dans une direction donnée, les capteurs 50 continuant simultanément d'envoyer de nouvelles mesures instantanées de vibrations. Le microprocesseur 51 qui compare en permanence chaque nouvelle valeur mesurée de vibrations à son propre système de références est alors à même de déterminer si le déplacement antérieur du chariot 30 a été à même de réduire ou non la valeur de la dernière mesure de vibrations transmise. Si la dernière valeur de vibrations transmise correspond à une diminution de l'état des vibrations, le microprocesseur continue d'assurer le déplacement du chariot 30 dans la même direction tout en s'assurant que le niveau général de vibrations a bien diminué. Dans le cas contraire, le microprocesseur change la direction de déplacement du chariot 30 si le niveau de vibrations, malgré la correction effectuée, augmente. L'algorithme de calcul fonctionne donc de manière récurrente et est bien évidemment conçu de manière à optimiser rapidement l'atteinte d'un résultat d'équilibre, le principe d'équilibrage retenu étant d'aller constamment dans une direction de déplacement réduisant le niveau de vibrations.

Lorsque le niveau de vibrations mesuré atteint une valeur minimale préenregistrée, la procédure automatique d'équilibrage est arrêtée.

A titre de variante complémentaire, il est envisageable d'utiliser en tant que masses d'équilibrage m1, m2 à la place des chariots 30, des pièces annulaires d'équilibrage, lestées ponctuellement ou découpées également ponctuellement sur la circonférence des pièces. Dans un tel cas, les pièces annulaires d'équilibrage sont disposées par exemple parallèlement entre elles autour de l'arbre tournant 5, et par exemple au nombre de deux. Leur déplacement relatif autour de l'arbre tournant 5 provoque le rééquilibrage du rotor. D'une manière générale, les masses d'équilibrage m1,m2 peuvent être constituées par toutes pièces montées mobiles autour de l'arbre tournant 5 et inclure des leviers ou bras lestés.

Il n'est également pas indispensable d'avoir recours à un microprocesseur, des systèmes de contrôle et de correction de l'état de déséquilibre 55 simplifiés pouvant convenir, tels des systèmes à base de circuits analogiques faisant intervenir une commande automatique ou même manuelle du déplacement des masses d'équilibrage m1,m2.

Le dispositif d'équilibrage dynamique et pondéral conforme à l'invention, ainsi que le procédé d'équilibrage afférent, permet en conséquence de contrôler avec précision et en temps réel de manière rapide et fiable les forces nécessaires pour corriger le déséquilibre de machines de forte masse. La possibilité de rotation des chariots 30 sur toute la périphérie des chemins de roulement 27 permet, en conjonction avec le recours à l'utilisation d'un microprocesseur, une correction particulièrement précise du déséquilibre d'un rotor. Le dispositif d'équilibrage est par ailleurs particulièrement bien protégé contre les agressions du milieu environnant, ce qui contribue à la fiabilité et à la longévité du dispositif.

## Revendications

1. Dispositif d'équilibrage dynamique et pondéral pour machines à rotors, en particulier pour ventilateurs industriels, comportant au moins un rotor (4) porté par un arbre tournant (5), lequel est logé dans deux paliers d'entraînement (22, 23) du rotor (4) situés respectivement de part et d'autre dudit rotor (4), au moins deux unités d'équilibrage pondéral (20,21) portées par ledit arbre et situées à une distance axiale et de part et d'autre du rotor (4) à équilibrer, et au moins un système de contrôle et de correction (55) de l'état de déséquilibre du rotor (4), ledit système étant apte à agir en permanence sur les unités d'équilibrage (20,21) lorsque le rotor (4) est en rotation pour contrôler et corriger l'équilibrage du rotor (4), chacune desdites au moins deux unités d'équilibrage pondéral (20,21) d'une part comprenant au moins deux masses d'équilibrage (m1, m2) montées déplaçables sous l'action de moyens d'entraînement (26) commandés par le système de contrôle et de correction (55) et aptes à se déplacer indépendamment l'une de l'autre selon des trajectoires formant un circuit fermé autour de l'arbre tournant (5) sous l'action du moyen d'entraînement (26) associé à chaque masse (m1, m2), par guidage dans au moins un moyen de guidage (27), et d'autre part étant formée par un anneau (25) dans lequel les masses d'équilibrage (m1, m2) se déplacent, **caractérisé en ce que** lesdites au moins deux unités d'équilibrage (20,21) sont situées au-delà des paliers d'entraînement (22, 23) du rotor (4), en considérant la position du rotor (4).

2. Dispositif d'équilibrage selon la revendication 1 **caractérisé en ce que** les deux unités d'équilibrage (20,21) sont situées à égale distance dudit rotor.

3. Dispositif d'équilibrage selon l'une des revendications 1 à 2 **caractérisé en ce que** les masses d'équilibrage (m1, m2) sont constituées par des chariots (30) ou des pièces annulaires.

4. Dispositif d'équilibrage selon la revendication 3 **caractérisé en ce que** les chariots (30), comportent une série de roues (31) aptes à se guider dans le moyen de guidage (27) formé par une ou des piste(s) de roulement.

5. Dispositif d'équilibrage selon la revendication 4 **caractérisé en ce que** les chariots (30) comportent des roues internes (31b) et externes (31a) en considérant le centre de l'anneau (25), associées respectivement à une piste de roulement interne (27b) et externe (27a).

6. Dispositif d'équilibrage selon l'une des revendications 4 ou 5 **caractérisé en ce que** les pistes de roulement (27) forment une trajectoire sensiblement circulaire autour de l'arbre tournant (5).

7. Dispositif d'équilibrage selon l'une des revendications 4 à 6 **caractérisé en ce que** les pistes de roulement (27) forment des trajectoires sensiblement elliptiques.

8. Dispositif d'équilibrage selon les revendications 5, 6 ou 7, **caractérisé en ce qu'**il comprend au moins deux chariots (30) par anneau d'équilibrage (25), les deux chariots (30) étant de préférence de masse identique dans chaque anneau (25) et entre chaque anneau (25).

9. Dispositif d'équilibrage selon l'une des revendications 4 à 8 **caractérisé en ce que** les chariots (30) de chaque anneau d'équilibrage (25) se déplacent dans ou sur les mêmes pistes de roulement (27).

10. Dispositif d'équilibrage selon l'une des revendications 4 à 8 **caractérisé en ce que** les chariots (30, 30') se déplacent dans des pistes de roulement différentes (27,27'), de préférence situées dans des plans axiaux différents, mais parallèles.

11. Dispositif d'équilibrage selon la revendication 10 **caractérisé en ce que** les pistes de roulement (27, 27') sont non-concentriques relativement à l'arbre tournant (5) et de préférence circulaires.

12. Dispositif d'équilibrage selon l'une des revendications 1 à 11 **caractérisé en ce que** le moyen (26) d'entraînement comprend un micromoteur, logé dans chaque masse d'équilibrage (m1, m2) et relié fonctionnellement au système de contrôle et de correction (55) de l'état de déséquilibre du rotor (4).

13. Dispositif d'équilibrage selon la revendication 12 **caractérisé en ce que** le micromoteur (26) est pourvu d'un organe de transmission de force (40) engrenant sur une crémaillère (42) concentrique aux pistes de roulement (27a, 27b) pour assurer le déplacement des masses d'équilibrage (m1, m2).

14. Dispositif d'équilibrage selon l'une des revendications 1 à 13 **caractérisé en ce que** le système de contrôle et de correction (55) de l'état de déséquilibre comprend :
- au moins un capteur (50) d'une valeur représentative de l'état de déséquilibre du rotor (4),
- un microprocesseur (51) chargé, d'une part d'évaluer en permanence l'état de déséquilibre du rotor (4) par comparaison des valeurs mesurées transmises en permanence par le ou les capteur(s) (50) avec des valeurs de références préalablement enregistrées, et d'autre part, si le résultat de la comparaison fait apparaître un état de déséquilibre, de commander et piloter le déplacement d'au moins une masse d'équilibrage (m1, m2, 30) jusqu'à l'équilibrage complet du rotor (4),
- une interface electro-mécanique (60) entre le ou les capteur(s) (50), le microprocesseur (51) et les moyens d'entraînement des masses d'équilibrage (m1, m2, 30).

15. Dispositif d'équilibrage selon la revendication 14 **caractérisé en ce qu'**il comporte, en tant que capteur (50), au moins un capteur de vibration, et de préférence deux capteurs, disposé(s) chacun au voisinage d'une unité d'équilibrage (20, 21) sur un palier d'entraînement (22, 23) ou sur l'arbre tournant (5).

16. Dispositif d'équilibrage selon la revendication 14 ou 15 **caractérisé en ce que** l'interface électro-mécanique comporte un contacteur (60) relié au microprocesseur (51) d'une part et monté dans chaque unité d'équilibrage (20, 21) et susceptible d'être relié électriquement avec les masses d'équilibrage (m1, m2, 30) d'autre part.

17. Dispositif d'équilibrage selon la revendication 16 **caractérisé en ce que** le contacteur (60) est un anneau de frottement en contact permanent avec des pistes de contact (65) ou est monté mobile pour venir en contact intermittent avec les pistes de contact (65) uniquement si un état de déséquilibre est détecté.

18. Dispositif d'équilibrage selon l'une des revendications 1 à 17 **caractérisé en ce qu'**il est conçu et dimensionné pour assurer une correction d'équilibrage au moins égale à 100 000 g.mm, et de préférence comprise entre 100 000 g.mm et 5 000 000 g.mm.

19. Ventilateur industriel équipé d'un dispositif d'équilibrage conforme à l'une des revendications 1 à 18.

## Patentansprüche

1. Dynamische Auswuchtvorrichtung für Maschinen mit Rotoren, insbesondere für industrielle Ventilatoren, mit mindestens einem Rotor (4), der von einer drehbaren Welle (5) getragen ist, die aufgenommen ist in zwei Antriebslagern (22, 23) des Rotors (4), die jeweils auf einer und der gegenüber liegenden Seite des Rotors (4) liegen, mindestens zwei Auswuchteinheiten (20, 21), die von der Welle getragen werden und einen axialen Abstand von der einen und der gegenüber liegenden Seite des auszuwuchtenden Rotors (4) aufweisen und mindestens einem Steuer- und Justiersystem (55) vom Zustand des Ungleichgewichts des Rotors (4), wobei das System ausgelegt ist ständig auf die Auswuchteinheiten (20, 21) zu wirken, wenn der Rotor (4) sich dreht, um das Gleichgewicht des Rotors (4) zu steuern und zu korrigieren und jede der mindestens zwei Auswuchteinheiten (20, 21) einerseits mindestens zwei Ausgleichsmassen (m1, m2) umfassen, die verschieblich montiert sind unter der Wirkung von Antriebsmitteln (26), die gesteuert werden von dem Steuer- und Justiersystem (55) und sich unabhängig voneinander bewegen können entlang Bahnen, die einen geschlossenen Kreis um die drehbare Welle (5) bilden, unter der Wirkung der Antriebsmittel (26), die jeder Masse (m1, m2) zugeordnet sind durch Führung in mindestens einer Führungseinrichtung (27), und andererseits gebildet sind aus einem Ring (25), in dem die Ausgleichsmassen (m1, m2) sich bewegen,
**dadurch gekennzeichnet, dass** die mindestens zwei Auswuchteinheiten (20, 21) jenseits der Antriebslager (22, 23) des Rotors (4) angeordnet sind mit Bezug auf die Position des Rotors (4).

2. Auswuchtvorrichtung gemäß Anspruch 1, **dadurch gekennzeichnet, dass** die zwei Auswuchteinheiten (20, 21) gleiche Abstände vom Rotor haben.

3. Auswuchtvorrichtung gemäß einem der Ansprüche 1 bis 2, **dadurch gekennzeichnet, dass** die Ausgleichsmassen (m1, m2) gebildet sind aus Laufeinrichtungen (30) oder ringförmigen Teilen.

4. Auswuchtvorrichtung gemäß Anspruch 3, **dadurch gekennzeichnet, dass** die Laufeinrichtungen (30) eine Reihe von Rädern (31) aufweisen, die ausgebildet sind zur Führung in der Führungseinrichtung (27), die gebildet ist aus einer oder mehreren Rollspuren.

5. Auswuchtvorrichtung gemäß Anspruch 4, **dadurch gekennzeichnet, dass** die Laufeinrichtungen (30) innere und äussere Räder (31b, 31a) mit Bezug auf das Zentrum des Rings (25) aufweisen, die jeweils einer inneren und äußeren Rollspur (27b, 27a) zugeordnet sind.

6. Auswuchtvorrichtung gemäß einem der Ansprüche 4 oder 5, **dadurch gekennzeichnet, dass** die Rollspuren (27) eine im wesentlichen kreisförmige Bahn um die drehbare Welle (5) bilden.

7. Auswuchtvorrichtung gemäß einem der Ansprüche 4 bis 6, **dadurch gekennzeichnet, dass** die Rollspuren (27) im wesentlichen elliptische Bahnen bilden.

8. Auswuchtvorrichtung gemäß den Ansprüchen 5, 6 oder 7 **dadurch gekennzeichnet, dass** mindestens zwei Laufeinrichtungen (30) pro Ausgleichsring (25) vorgesehen sind, wobei die Laufeinrichtungen (30) vorzugsweise in jedem Ring (25) und zwischen jedem Ring (25) identische Massen aufweisen.

9. Auswuchtvorrichtung gemäß einem der Ansprüche 4 bis 8, **dadurch gekennzeichnet, dass** die Laufeinrichtungen (30) von jedem Ausgleichsring (25) sich in oder auf den selben Rollspuren (27) bewegen.

10. Auswuchtvorrichtung gemäß einem der Ansprüche 4 bis 8, **dadurch gekennzeichnet, dass** die Laufeinrichtungen (30, 30') sich in unterschiedlichen Rollspuren (27, 27') bewegen, die vorzugsweise in unterschiedlichen axialen aber parallelen Ebenen angeordnet sind.

11. Auswuchtvorrichtung gemäß Anspruch 10, **dadurch gekennzeichnet, dass** die Rollspuren (27, 27') nicht konzentrisch mit Bezug auf die drehende Welle (5) und vorzugsweise kreisförmig sind.

12. Auswuchtvorrichtung gemäß einem der Ansprüche 1 bis 11, **dadurch gekennzeichnet, dass** das Antriebsmittel (26) einen Mikromotor aufweist, der in jeder Ausgleichsmasse (m1, m2) angeordnet und funktional mit dem Steuer- und Justiersystem (55) für den Zustand des Ungleichgewichts des Rotors (4) verbunden ist.

13. Auswuchtvorrichtung gemäß Anspruch 12, **dadurch gekennzeichnet, dass** der Mikromotor (26) versehen ist mit einem Element zur Kraftübertragung (40), das eingehakt ist in eine zu den Rollspuren (27a, 27b) konzentrische Zahnstange (42), um die Bewegung der Ausgleichsmassen (m1, m2) zu gewährleisten.

14. Auswuchtvorrichtung gemäß einem der Ansprüche 1 bis 13, **dadurch gekennzeichnet, dass** das Steuer- und Justiersystem (55) für den Zustand des Ungleichgewichts des Rotors (4) aufweist:
- mindestens einen Messwertaufnehmer (50) für einen Wert, der den Zustand des Ungleichgewichts des Rotors (4) wieder gibt,
- einem Mikroprozessor (51), der die Aufgabe hat einerseits ständig den Zustand des Ungleichgewichts des Rotors (4) aufzunehmen zum Vergleich mit den gemessenen Werte, die ständig von dem oder den Messwertaufnehmer(n) (50) mit Bezugswerten übertragen werden, die vorher aufgenommen wurden und andererseits, wenn das Ergebnis des Vergleichs einen Zustand des Ungleichgewichts feststellen lässt, die Bewegung mindestens einer Ausgleichsmasse (m1, m2, 30) anzuweisen und zu führen bis zu einem vollständigen Ausgleich des Rotors (4),
- eine elektro-mechanische Schnittstelle (6) zwischen dem oder den Messwertaufnehmer(n) (50), dem Mikroprozessor (51) und den Antriebsmitteln der Ausgleichsmassen (m1, m2, 30).

15. Auswuchtvorrichtung gemäß Anspruch 14, **dadurch gekennzeichnet, dass** soweit die Messwertaufnehmer (50) betroffen sind mindestens ein Messwertaufnehmer (50) und vorzugsweise zwei Messwertaufnehmer (50) für Vibrationen vorgesehen sind, von denen jeder neben einer Auswuchteinheit (20, 21) auf einem Antriebslager (22, 23) oder auf der drehenden Welle (5) angeordnet sind.

16. Auswuchtvorrichtung gemäß Anspruch 14 oder 15, **dadurch gekennzeichnet, dass** die elektro-mechanische Schnittstelle (6) einen Kontakt (6) aufweist, der einerseits mit dem Mikroprozessor verbunden und in jeder Auswuchteinheit (20, 21) montiert ist und andererseits geeignet ist galvanisch mit den Ausgleichsmassen (m1, m2, 30) verbunden zu werden.

17. Auswuchtvorrichtung gemäß Anspruch 16, **dadurch gekennzeichnet, dass** der Kontakt (60) ein Schleifring ist, der in ständigem Kontakt mit den Kontaktspuren (65) ist oder beweglich montiert ist um abwechselnd ausschließlich in Kontakt zu kommen mit den Kontaktspuren (65), wenn ein Zustand des Ungleichgewichts festgestellt wird.

18. Auswuchtvorrichtung gemäß einem der Ansprüche 1 bis 17, **dadurch gekennzeichnet, dass** Entwurf und Abmessung zur Gewährleistung einer Ausgleichskorrektur von mindestens gleich 100 000 gmm und vorzugsweise zwischen 100 000 und 5 000 000 gmm vorgesehen ist.

19. Industrieller Ventilator der mit einer Auswuchtvorrichtung gemäß einem der Ansprüche 1 bis 18 ausgestattet ist.

## Claims

1. Dynamic weight balancing device for rotor machines, in particular for industrial fans, comprising at least one rotor (4) carried by a rotating shaft (5), which is housed in two drive bearings (22, 23) of the rotor (4) situated respectively on each side of the said rotor (4), at least two weight balancing units (20, 21) carried by the said shaft and situated at an axial distance on each side of the rotor (4) to be balanced, and at least one system for monitoring and correcting (55) the state of imbalance of the rotor (4), the said system being able to act continuously on the balancing units (20, 21) when the rotor (4) is in rotation in order to monitor and correct the balancing of the rotor (4), each of the said at least two weight balancing units (20, 21) on the one hand comprising at least two balancing weights (m1, m2) mounted so as to be able to be moved under the action of drive means (26) controlled by the monitoring and correction system (55) and able to move independently of each other on paths forming a closed circuit around the rotating shaft (5) under the action of the drive means (26) associated with each weight (m1, m2), by guidance in at least one guidance means (27) and on the other hand being formed by a ring (25) in which the balancing weights (m1, m2) move, **characterised in that** the said at least two balancing units (20, 21) are situated beyond the drive bearings (22, 23) of the rotor (4), considering the position of the rotor (4).

2. Balancing device according to Claim 1, **characterised in that** the two balancing units (20, 21) are situated at equal distances from the said rotor.

3. Balancing device according to any of Claims 1 to 2, **characterised in that** the balancing weights (m1, m2) consist of carriages (30) or annular pieces.

4. Balancing device according to Claim 3, **characterised in that** the carriages (30) comprise a series of wheels (31) able to be guided in the guidance means (27) formed by a running track or tracks.

5. Balancing device according to Claim 4, **characterised in that** the carriages (30) comprise internal (31b) and external (31a) wheels considering the centre of the ring (25), associated respectively with an internal (27b) and external (27a) running track.

6. Balancing device according to any of Claims 4 or 5, **characterised in that** the running tracks (27) form a substantially circular path around the rotating shaft (5).

7. Balancing device according to any of Claims 4 to 6, **characterised in that** the running tracks (27) form substantially elliptical paths.

8. Balancing device according to Claims 5, 6 or 7, **characterised in that** it comprises at least two carriages (30) for each balancing ring (25), the two carriages (30) preferably having identical weights in each ring (25) and between each ring (25).

9. Balancing device according to any of Claims 4 to 8, **characterised in that** the carriages (30) of each balancing ring (25) move in or on the same running tracks (27).

10. Balancing device according to any of Claims 4 to 8, **characterised in that** the carriages (30, 30') move in different running tracks (27, 27'), preferably situated in different but parallel axial planes.

11. Balancing device according to Claim 10, **characterised in that** the running tracks (27, 27') are non-concentric relative to the rotating shaft (5), and preferably circular.

12. Balancing device according to any of Claims 1 to 11, **characterised in that** the drive means (27) comprises a micromotor housed in each balancing weight (m1, m2) and connected functionally to the system (55) for monitoring and correcting the state of imbalance of the rotor (4).

13. Balancing device according to Claim 12, **characterised in that** the micromotor (26) is provided with a force transmission member (40) meshing on a rack (42) concentric with the running tracks (27a, 27b) in order to provide the movement of the balancing weights (m1, m2).

14. Balancing device according to any of Claims 1 to 13,
**characterised in that** the system (55) for monitoring and correcting the state of imbalance comprises:
- at least one sensor (50) for a value representing the state of imbalance of the rotor (4),
- a microprocessor (51) responsible firstly for continuously assessing the state of imbalance of the rotor (4) by comparing the measured values transmitted continuously by the sensor or sensors (50) with previously recorded reference values and secondly, if the result of the comparison reveals a state of imbalance, demanding and controlling the movement of at least one balancing weight (m1, m2, 30) until there is complete balancing of the rotor. (4),
- an electromechanical interface (60) between the sensor or sensors (50), the microprocessor (51) and the drive means of the balancing masses (m1, m2, 30).

15. Balancing device according to Claim 14, **characterised in that** it comprises, as a sensor (50), at least one vibration sensor, and preferably two sensors, each disposed in the vicinity of a balancing unit (20, 21) on a drive bearing (22, 23) or on the rotating shaft (5).

16. Balancing device according to Claim 14 or 15, **characterised in that** the electromechanical interface comprises a contactor (60) connected to the microprocessor (51) on the one hand and mounted in each balancing unit (20, 21) and able to be connected electrically with the balancing weights (m1, m2, 30) on the other hand.

17. Balancing device according to Claim 16, **characterised in that** the contactor (60) is a friction ring in continuous contact with the contact tracks (65) and is mounted so as to be able to move in order to come into intermittent contact with the contact tracks (65) only if a state of imbalance is detected.

18. Balancing device according to any of Claims 1 to 17, **characterised in that** it is designed and sized so as to provide a balancing correction of at least 100,000 g.mm, and preferably between 100,000 g.mm and 5,000,000 g.mm.

19. Industrial fan equipped with a balancing device according to any of Claims 1 to 18.
